# EUROPÄISCHE PATENTSCHRIFT

(11) **EP 2 832 052 B1**
(45) Veröffentlichungstag und Bekanntmachung des Hinweises auf die Patenterteilung: **03.01.2018**
(21) Anmeldenummer: 13724793.8
(22) Anmeldetag: 17.05.2013
(51) Int. Cl.: H04L 12/70

(54) **VERFAHREN ZUM ÜBERTRAGEN VON DATENPAKETEN IN EINEM KOMMUNIKATIONSNETZWERK UND KOMMUNIKATIONSNETZWERK**
METHOD FOR TRANSMITTING DATA PACKETS IN A COMMUNICATIONS NETWORK AND COMMUNICATIONS NETWORK
PROCÉDÉ DE TRANSMISSION DE PAQUETS DE DONNÉES DANS UN RÉSEAU DE COMMUNICATION ET RÉSEAU DE COMMUNICATION

(30) Priorität: 18.06.2012 DE 102012210243
(43) Veröffentlichungstag der Anmeldung: 04.02.2015
(73) Patentinhaber: Siemens Aktiengesellschaft, 80333 München (DE)
(72) Erfinder: SCHEFFEL, Matthias, 82008 Unterhaching (DE)
(86) Internationale Anmeldenummer: PCT/EP2013/060285
(87) Internationale Veröffentlichungsnummer: WO 2013/189677

(56) Entgegenhaltungen:
- DE-A1-102008 039 580
- US-A- 6 091 709
- US-A1- 2008 071 924

## Beschreibung

Die vorliegende Erfindung betrifft ein Verfahren zum Übertragen von Datenpaketen in einem Kommunikationsnetzwerk aus synchronisierten Knoten über einen vorbestimmten Pfad in dem Kommunikationsnetzwerk und ein solches Kommunikationsnetzwerk.

Kommunikationsnetze für Steuerungs- und Regelungsprozesse, wie in der Fertigungs- und Prozessindustrie, stellen häufig räumlich verteilte Systeme dar, bei denen Daten zwischen den teilnehmenden Knoten mit einer bestimmten Dienstgüte übertragen werden müssen. Beispiele für solche Knoten sind Steuerungsgeräte, Sensoren, Aktuatoren oder Switche. Als Kommunikationsplattform kommt typischerweise ein industrielles Ethernet mit Realzeitfähigkeit, wie z.B. PROFINET, zum Einsatz. Zur Gewährleistung von geringen Ende-zu-Ende-Verzögerungen bzw. deren Variation, insbesondere Jitter, müssen die kritischen Steuerung- und Regelungsdaten gegenüber anderen Daten im Kommunikationsnetz bevorzugt, d.h. insbesondere priorisiert, weitergeleitet werden.

Das oben erwähnte PROFINET-Kommunikationsnetz als Beispiel eines industriellen Ethernet-Standards basiert auf einem Zeitmultiplexverfahren zur Gewährleistung unterschiedlicher Dienstgüten. Dabei sind alle Knoten des PROFINET-Kommunikationsnetzes miteinander synchronisiert. Ein Zeitzyklus des verwendeten Zeitmultiplexverfahrens besteht dabei aus fixen Zeitfenstern für isochronen Realzeitverkehr (IRT, Isochronous Realtime), anderen Realzeitverkehr (RT, Realtime) und normalen Verkehr. Dieser Zyklus wird fortwährend wiederholt. Innerhalb des jeweiligen Zeitfensters wird ausschließlich der dafür vorgesehene Verkehr bedient. Andere Pakete werden an dem jeweiligen Knoten zwischengespeichert.

Das Zeitfenster für den isochronen Realzeitverkehr erlaubt deterministische Übertragungscharakteristiken, beispielsweise für Motion-Control-Anwendungen. Hierbei werden die Netzressourcen entlang des geplanten Pfades in dem Kommunikationsnetzwerk schon vor der Inbetriebnahme des Systems exklusiv reserviert. Damit ist genau festgelegt, wann und auf welcher Netzschnittstelle oder Port ein Knoten ein Paket einspeist bzw. ein empfangenes Paket weiterleitet. Durch dieses Vorgehen kann ein konkurrierender Zugriff auf Netzwerk-Ressourcen, wie die gleichzeitige Weiterleitung von Paketen über den gleichen Port eines Knotens, verhindert werden. Jedoch können die verfügbaren Ressourcen des Kommunikationsnetzwerkes nicht dynamisch und damit nicht effizient durch anderen Verkehr mitgenutzt werden.

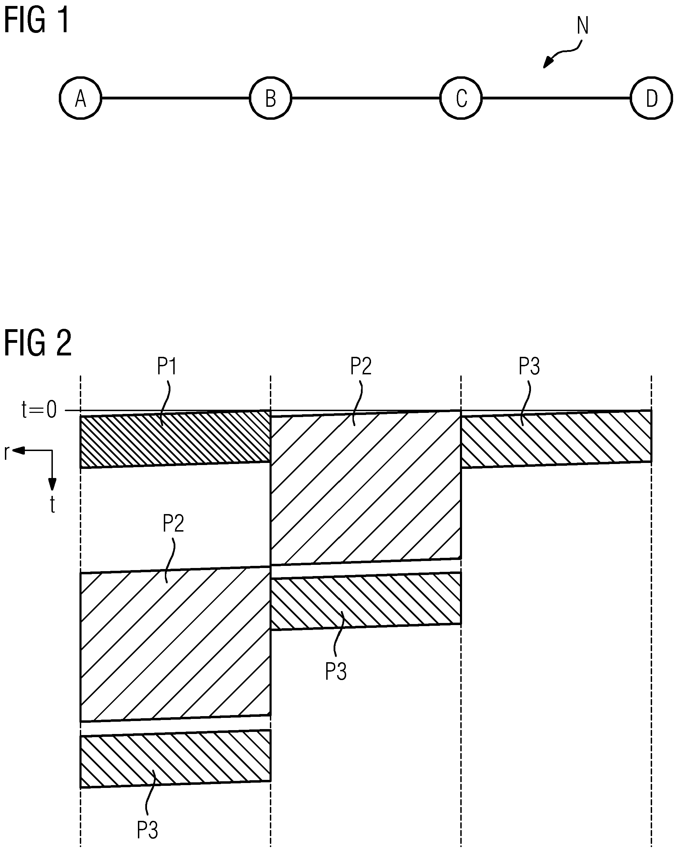

In dem Zeitfenster für normalen Verkehr hingegen erfolgt die Weiterleitung von Paketen basierend auf deren Priorität, insbesondere durch Strict-Priority-Scheduling, und statistischem Multiplexen. Pakete werden erst dann weitergeleitet, wenn sie komplett empfangen wurden. Dies kann als Store-and-Forward-Weiterleitung bezeichnet werden. Allerdings kann es hierbei vorkommen, dass hochpriore Steuerungs- und Regelungsdatenpakete Wartezeiten an den Knoten erfahren, weil der entsprechende Port, auf den die Pakete weitergeleitet werden sollen, bereits durch einen laufenden Sendevorgang eines anderen Pakets blockiert ist. Dies kann zu stark variierenden Ende-zu-Ende-Verzögerungen führen. Diese Problematik ist schematisch in den Fig. 1 und 2 dargestellt. Dabei illustriert Fig. 1 ein schematisches Diagramm einer Netztopologie eines Kommunikationsnetzwerkes N mit vier Knoten A, B, C, D. Ein Pfad P des Kommunikationsnetzwerkes N ist durch die Teilpfade D-C, C-B und B-A bestimmt. Ferner zeigt Fig. 2 ein schematisches Diagramm zur Übertragung von Datenpaketen P1-P3 über das Kommunikationsnetzwerk N der Fig. 1.

Die Pakete P1 und P3 sind hochpriore Datenpakete, wohingegen das Paket P2 ein niedrigpriores Datenpaket darstellt. Dabei ist beispielsweise der Knoten A eine Steuereinrichtung (Controller), dem zyklisch von den Sensorknoten B und D hochpriore Datenpakete, hier die Datenpakete P1 und P3, übermittelt werden. Der Knoten C ist beispielsweise ein Aktuator, der von der Steuereinrichtung A zyklisch hochpriore Stellwerte erhält. Dabei sendet der Knoten C nur niedrigpriore Datenpakete P2 zu dem Knoten A. Des Weiteren kann angenommen werden, dass die hochprioren Datenpakete P1 und P3 als Ethernet-Pakete mit gleicher Länge übertragen werden. In der Fig. 2 wird ausschließlich die Kommunikation in Richtung zum Knoten A, dem Zielknoten, betrachtet. Entsprechendes gilt allerdings auch für die Gegenrichtung, dann zu dem Zielknoten D.

Im Detail zeigt Fig. 2 das Nachrichtenflussdiagramm zur Übertragung der Datenpakete P1-P3 zu Beginn eines Zyklus zum Zeitpunkt t=0. t zeigt dabei die zeitliche Ausdehnung, wohingegen r die räumliche Ausdehnung illustriert. Zu dem Zeitpunkt t=0 sendet der Knoten B das hochpriore Datenpaket P1 in Richtung des Knotens A, der Knoten C das niedrigpriore Datenpaket P2 in Richtung des Knotens A und der Knoten D das hochpriore Datenpaket P3 in Richtung des Knotens A. Da an jedem Knoten B, C, D nur ein Datenpaket P1, P2, P3 in Richtung des Zielknotens A zum Senden bereitsteht, wird das jeweilige Datenpaket P1, P2, P3 an jedem Knoten B, C, D ausgesendet. Problematisch ist die hohe Sendedauer des niedrigprioren Datenpaketes P2 am Knoten C aufgrund dessen großer Paketlänge, insbesondere im Vergleich zu den Paketlängen der hochprioren Datenpakete P1, P3.

An dem Knoten C muss das von dem Nachbarknoten D ankommende hochpriore Datenpaket P3 auf die komplette Übertragung des niedrigprioren Datenpakets P2 warten, da der Sendeprozess des niedrigprioren Datenpakets P2 bereits vor dem Eintreffen des Paketes P3 an dem Knoten C gestartet war. Erst nach vollständigem Übertragen des niedrigprioren Datenpaketes P2 mit der relativ großen Datenlänge kann das Datenpaket P3 vom Knoten C an den Knoten B übermittelt werden. Auch an dem Knoten B muss dann das Datenpaket P3 die vollständige Übertragung des Datenpakets P2 von dem Knoten B an den Knoten A abwarten. Dadurch ergibt sich eine hohe Verzögerung des hochprioren Datenpakets P3, insbesondere für lange Linientopologien bestehend aus einer Mehrzahl von Knoten.
US 6 091 709 A beschreibt ein Verfahren für paketvermittelte Netzwerke, bei dem Füll-Paketflüsse von niedrigprioren Warteschlangen in eine hochpriore Warteschlange befördert werden, um die hochpriore Warteschlange optimal zu nutzen.
US 2008/071924 A1 beschreibt ein Verfahren zum Unterbrechen einer Übertragung von niedrigprioren Paketen, bei dem hochpriore Pakete vollständig übertragen werden, während die Übertragung von niedrigprioren Paketen unterbrochen und anschließend wieder fortgesetzt wird.
DE 10 2008 039580 A1 beschreibt ein Verfahren zum Übertragen von Datenpaketen in einem Kommunikationsnetz, bei dem die Übertragung von Datenpaketen mit einer niedrigen Priorität unterbrochen wird, um die Übertragung von Datenpaketen mit einer hohen Priorität durchzuführen.
Daher ist es eine Aufgabe der vorliegenden Erfindung, eine verbesserte Übertragung von Datenpaketen in einem Kommunikationsnetzwerk aus synchronisierten Daten zu schaffen.

Demgemäß wird ein Verfahren nach unabhängigem Anspruch 1 zum Übertragen von Datenpaketen in einem Kommunikationsnetzwerk aus synchronisierten Knoten über einen vorbestimmten Pfad in dem Kommunikationsnetzwerk vorgeschlagen.

Somit ist die Übertragung von Datenpaketen in dem Kommunikationsnetzwerk aus synchronisierten Knoten über einen vorbestimmten Pfad dahingehend verbessert, dass hochpriore Datenpakete auf diesem vorbestimmten Pfad nicht durch niedrigpriore Datenpakete verzögert werden. Dazu werden die zweiten hochprioren Datenpakete gezielt in den vorbestimmten Pfad des Kommunikationsnetzwerkes eingespeist. Dabei werden die zusätzlichen zweiten hochprioren Datenpakete an den Knoten entlang des vorbestimmten Pfades eingespeist, welche keine oder weniger hochpriore Datenpakete, insbesondere Realzeitdaten, senden als die anderen Knoten. Dadurch wird die Ende-zu-Ende-Verzögerung und der Jitter der hochprioren Datenpakete, insbesondere der Steuerungs- und Regelungsdaten, minimiert. Dadurch wird eine höhere Dienstgüte in dem Kommunikationsnetzwerk bereitgestellt.

Ein weiterer Vorteil liegt darin, dass in dem jeweiligen Knoten das Scheduling zur Auswahl des nächsten zu sendenden Datenpaketes insbesondere basierend auf der Strict-Priority-Methode nicht geändert werden muss. Damit ist das vorliegende Verfahren im Unterschied zu denjenigen Verfahren, bei denen alle Sendezeitpunkte geplant werden, wie z.B. bei PROFINET IRT (Asynchronous Realtime), deutlich einfacher zu konfigurieren und stellt geringere Anforderungen an die Hardware des jeweiligen Knotens. Außerdem ist der vorliegende Ansatz kompatibel zu anderen Knoten des Kommunikationsnetzwerkes, welche die vorliegende Erweiterung bei reduzierter Leistungsfähigkeit nicht unterstützen.

Wie oben bereits ausgeführt, ist das zusätzliche Einspeisen von kurzen hochprioren Datenpaketen oder Paketen an all denjenigen Knoten des Pfades des Kommunikationsnetzwerkes von Vorteil, die keine oder weniger eigene hochpriore Datenpakete aussenden als die anderen Knoten dieses Pfades. Dies verhindert, dass niedrigpriore lange Datenpakete zu Beginn des jeweiligen Zeitfensters ausgesendet werden und von Nachbarknoten eintreffende hochpriore Datenpakete blockiert werden.

Das Kommunikationsnetzwerk ist beispielsweise ein Ethernet, insbesondere ein PROFINET. Die Knoten sind synchronisiert, d.h. sie haben alle dieselbe Systemzeit. Ferner speisen die synchronisierten Knoten die Datenpakete in den vorbestimmten Pfad synchron ein, d.h. zu vorbestimmten gleichen Zeitpunkten. Der Quellknoten ist die Quelle des ersten hochprioren Datenpaketes, der Zielknoten ist das Ziel des ersten hochprioren Datenpaketes, und der zumindest eine Zwischenknoten ist in dem vorbestimmten Pfad zwischen dem Quellknoten und dem Zielknoten gekoppelt. Der jeweilige Zwischenspeicher ist beispielsweise als ein RAM-Speicher (RAM; Random Access Memory) oder als EEPROM-Speicher (Electrical Erasable Programmable Read-Only Memory) ausgebildet.

Das nachfolgende Beispiel verdeutlicht die Funktionsweise des vorliegen Verfahrens. Bei dem Kommunikationsnetzwerk dieses Beispiels wird angenommen, dass alle Steuerungs- und Regelungsdaten zu Beginn des Zeitfensters vorliegen und diese beispielsweise mittels VLAN-Tagging gegenüber anderen Datenpaketen mit einer höheren Priorität markiert und damit als hochpriore Datenpakete behandelt werden können. Des Weiteren wird davon ausgegangen, dass die hochprioren Datenpakete mit den Steuerungs- und Regelungsdaten in kurzen Ethernet-Paketen mit einer minimalen Paketlänge von 64 Byte oder in geringfügig längeren Paketen übertragen werden. Bei 100 Mbit/s Ethernet (Fast Ethernet) liegt die Sendedauer eines kurzen Datenpaketes unter Berücksichtigung der dem Paket vorangehenden Präambel (7 Byte) und dem Start-of-Frame Delimiter (1 Byte) bei rund 6 µs.

Ein maximal langes Ethernet-Paket weist hingegen eine Sendedauer von etwa 120 µs auf. Zwischen zwei aufeinander folgenden Datenpaketen muss eine Zeit für den Interframe Gap entsprechend 12 Byte abgewartet werden. Die Zeit für den Interframe Gap betrifft einen vorgegebenen minimalen zeitlichen Abstand zwischen zwei an einem Knoten des vorbestimmten Pfades einzuspeisenden Datenpaketen. Die Interframe Gap-Zeit entspricht dabei etwa 1 µs. Die Ausbreitungsgeschwindigkeit von Ethernet-Paketen über verdrillte Kupferleitungen beträgt etwa 200.000 km/s. Damit ergibt sich eine Signallaufzeit auf einem maximal langen 100 m Link von 500 ns.

In diesem Beispiel werden drei benachbarte Knoten eines Kommunikationspfades betrachtet. Ein linker Knoten, hier der Zielknoten, ist über einen Link mit einem mittleren Knoten, hier der Zwischenknoten, verbunden, welcher wiederum einen direkten Link zu einem rechten Knoten, hier der Quellknoten, hat. Es wird angenommen, dass der mittlere Knoten (Zwischenknoten) ein niedrigpriores langes Datenpaket und der rechte Knoten ein hochpriores kurzes Datenpaket zum linken Knoten (Zielknoten) senden wollen. Beide Knoten senden das jeweilige Paket zu Beginn des Zeitfensters zu ihrem jeweils linken Nachbarknoten. Am mittleren Knoten müsste das vom rechten Knoten ankommende hochpriore Datenpaket herkömmlicherweise warten, bis das lange niedrigpriore Datenpaket komplett ausgesendet wurde. Aufgrund stark unterschiedlicher Sendedauern von 120 µs gegenüber 6 µs bedeutete dies einen signifikanten Jitter für das hochpriore Datenpaket an dem mittleren Knoten. Dieser Effekt würde sich entsprechend akkumulieren, wenn weitere Zwischenknoten zwischen dem linken und dem mittleren Knoten vorhanden wären. Zur Behebung dieses Problems wird erfindungsgemäß das zusätzliche zweite hochpriore Datenpaket an dem mittleren Knoten mit dem Ziel des linken Knotens eingespeist. Dieses zweite hochpriore Datenpaket kann als reines Dummy-Datenpaket ohne sinnvollen Paketinhalt ausgeführt sein oder durch Segmentierung eines großen niedrigprioren Datenpakets erzeugt werden. Im letzteren Fall werden die Segmente an dem Zielknoten oder einem Zwischenknoten entlang des Pfades wieder zusammengeführt.

Erfindungsgemäß senden aber der mittlere und der rechte Knoten zu Beginn des Zeitfensters ein hochpriores Datenpaket in Richtung des linken Knotens (Zielknoten). Das am mittleren Knoten vorhandene niedrigpriore lange Paket wird aufgrund der geringeren Priorität zwischengespeichert. Wegen dem Interframe Gap muss der mittlere Knoten nach dem Aussenden des hochprioren Pakets 1 µs warten, bevor das zweite hochpriore Datenpaket gesendet werden darf. Innerhalb dieser Wartezeit ist bereits das hochpriore Datenpaket vom benachbarten rechten Knoten mit der Laufzeitverzögerung von maximal 500 ns über den Link komplett empfangen worden. Deshalb wird als nächstes zu sendendes Datenpaket an den mittleren Knoten das von dem rechten Knoten empfangene hochpriore Datenpaket ausgewählt und das niedrigpriore Datenpaket wird weiterhin zwischengespeichert. Dadurch erfährt das vom rechten Knoten ausgesendete hochpriore Datenpaket im Gegensatz zum herkömmlichen Szenario keine Wartezeit an dem Zwischenknoten, sondern kann sofort von diesem weitergeleitet werden. Folglich werden die Ende-zu-Ende-Verzögerungen und der Jitter minimiert.

Bei einer Ausführungsform generiert ein jeder der Zwischenknoten, deren erster Zwischenspeicher zu dem bestimmten Zeitpunkt leer ist und deren zweiter Zwischenspeicher zu dem bestimmten Zeitpunkt mit zumindest einem niedrigprioren Datenpaket gefüllt ist, das zweite hochpriore Datenpaket und speist dieses in den vorbestimmten Pfad in Richtung des Zielknotens ein.

Vorteilhafterweise speist ein jeder Zwischenknoten folglich, der kein hochpriores Datenpaket puffert, aber zumindest ein niedrigpriores Datenpaket puffert, ein zweites und damit zusätzliches hochpriores Datenpaket in den vorbestimmten Pfad ein. Damit sendet der jeweilige Zwischenknoten das gepufferte niedrigpriore Datenpaket nicht aus, wenn von dem Quellknoten ein hochpriores Datenpaket versendet wird. Daher werden niedrigpriore Datenpakete zwischengespeichert und nicht gesendet, so dass sie das vom Quellknoten ausgesendete hochpriore Datenpaket nicht blockieren können.

Bei einer weiteren Ausführungsform wird die Länge des zweiten hochprioren Datenpaketes in Abhängigkeit der Länge des ersten hochprioren Datenpaketes eingestellt.

Durch die Einstellung der Länge des zweiten hochprioren Datenpaketes in Abhängigkeit von der Länge des ersten hochprioren Datenpaketes wird die an dem jeweiligen Zwischenknoten eingestellte Wartezeit für das erste hochpriore Datenpaket vorteilhafterweise eingestellt.

Bei einer weiteren Ausführungsform wird die Länge des zweiten hochprioren Datenpaketes in Abhängigkeit einer maximalen Länge der niedrigprioren Datenpakete eingestellt.

Die maximale Länge der niedrigprioren Datenpakete gibt die maximale Verzögerung für die ersten hochprioren Datenpakete vor. Folglich kann vorteilhafterweise in Abhängigkeit dieser maximalen Länge der niedrigprioren Datenpakete die Länge des zweiten hochprioren Datenpaketes eingestellt werden.

Bei einer weiteren Ausführungsform werden die Knoten des Kommunikationsnetzwerkes mittels eines Zeitmultiplexverfahrens synchronisiert, wobei als der bestimmte Zeitpunkt der Beginn eines bestimmten Zeitfensters des Zeitmultiplexverfahrens verwendet wird.

Durch das Zeitmultiplexverfahren wird der bestimmte Zeitpunkt zum Versenden der Datenpakete festgelegt.

Bei einer weiteren Ausführungsform werden durch das Zeitmultiplexverfahren erste Zeitfenster für einen isochronen Realzeitdienst, zweite Zeitfenster für einen nicht-isochronen Realzeitdienst und dritte Zeitfenster für einen nicht-realzeitfähigen Dienst bereitgestellt. Dabei wird als der bestimmte Zeitpunkt der Beginn des zweiten Zeitfensters oder der Beginn des dritten Zeitfensters verwendet.

Somit kann das vorliegende Verfahren für den oben erwähnten Realzeitverkehr (RT) und den normalen Verkehr (NRT) eingesetzt werden.

Bei einer weiteren Ausführungsform werden die hochprioren und die niedrigprioren Datenpakete in dem zweiten Zeitfenster und in dem dritten Zeitfenster in Abhängigkeit von den Datenpaketen zugeordneten Prioritäten auf dem vorbestimmten Pfad weitergeleitet.

Bei einer weiteren Ausführungsform ist das Kommunikationsnetzwerk ein Ethernet-Netzwerk, insbesondere ein PROFINET-Netzwerk.

Bei einer weiteren Ausführungsform haben die hochprioren Datenpakete eine erste maximale Datenpaketlänge und die niedrigprioren Datenpakete eine zweite maximale Datenpaketlänge.

Dabei ist die zweite maximale Datenpaketlänge größer als die erste maximale Datenpaketlänge.

Bei einer weiteren Ausführungsform wird das zweite hochpriore Datenpaket durch Segmentierung eines in dem zweiten Zwischenspeicher gespeicherten niedrigprioren Datenpaketes generiert.

Diese Ausführungsform stellt eine einfache Möglichkeit für die Generierung des zweiten hochprioren Datenpaketes dar. Weiter werden hiermit auch sinnvolle Daten als zweite hochpriore Datenpakete über den vorbestimmten Pfad übertragen. Die Segmente werden dann an dem Zielknoten oder einem dem Zielknoten vorgeordneten Zwischenknoten wieder zusammengefügt.

Bei einer weiteren Ausführungsform wird das zweite hochpriore Datenpaket als ein Dummy-Datenpaket generiert. Das Dummy-Datenpaket hat insbesondere keine sinnvollen Daten in seinem Nutzdatenfeld.

Die Verwendung von Dummy-Datenpaketen als zweite hochpriore Datenpakete stellt eine sehr einfach zu implementierende Form dar.

Bei einer weiteren Ausführungsform wird für den Fall, dass die Laufzeit eines Datenpaketes zwischen zwei Knoten des vorbestimmten Pfades kleiner als ein vorgegebener minimaler zeitlicher Abstand zwischen zwei an einem Knoten des vorbestimmten Pfades einzuspeisenden Datenpaketen ist, ein Header eines an dem Zwischenknoten ankommenden und noch nicht vollständig empfangenen Datenpaketes ausgewertet. Dabei wird in Abhängigkeit des ausgewerteten Headers ein zweites hochpriores Datenpaket durch den Zwischenknoten generiert und in den vorbestimmten Pfad eingespeist. Alternativ wird das ankommende Datenpaket vollständig empfangen und anschließend durch den Zwischenknoten wieder in den vorbestimmten Datenpfad eingespeist.

Bei einer weiteren Ausführungsform werden für den Fall, dass die Laufzeit eines Datenpaketes zwischen zwei Knoten des vorbestimmten Pfades kleiner als ein vorgegebener minimaler zeitlicher Abstand zwischen zwei an einem Knoten des vorbestimmten Pfades einzuspeisenden Datenpaketen ist, ausschließlich hochpriore Datenpakete von den Zwischenknoten in den vorbestimmten Pfad eingespeist.
Die beiden letzten obigen Ausführungsformen sind besonders geeignet für Kommunikationsnetze mit höheren Bitraten, z.B. für Gigabit-Ethernet, da es bei diesem vorkommen kann, dass der Interframe Gap kürzer als die Signallaufzeit auf dem Link ist.
Weiterhin wird ein Computerprogrammprodukt vorgeschlagen, welches auf einer programmgesteuerten Einrichtung die Durchführung des wie oben erläuterten Verfahrens veranlasst.
Ein Computerprogrammprodukt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.
Außerdem wird ein Datenträger mit einem gespeicherten Computerprogramm mit Befehlen vorgeschlagen, welche die Durchführung des wie oben erläuterten Verfahrens auf einer programmgesteuerten Einrichtung veranlasst.
Ferner wird ein Kommunikationsnetzwerk aus synchronisierten Knoten gemäß unabhängigem Anspruch 14 zum Übertragen von Datenpaketen über einen vorbestimmten Pfad in dem Kommunikationsnetzwerk, vorgeschlagen. Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.
Dabei zeigen:
- Fig. 1: ein schematisches Diagramm einer Netztopologie eines Kommunikationsnetzwerkes;
- Fig. 2: ein schematisches Diagramm zur herkömmlichen Übertragung von Datenpaketen über das Kommunikationsnetzwerk der Fig. 1;
- Fig. 3: ein Ablaufdiagramm eines Ausführungsbeispiels eines Verfahrens zum Übertragen von Datenpaketen in einem Kommunikationsnetzwerk aus synchronisierten Knoten;
- Fig. 4: das schematisches Diagramm der Netztopologie des Kommunikationsnetzwerkes der Fig. 1; und
- Fig. 5: ein schematisches Diagramm zur erfindungsgemäßen Übertragung von Datenpaketen über das Kommunikationsnetzwerk der Fig. 3.

In den Figuren sind gleiche oder funktionsgleiche Elemente mit denselben Bezugszeichen versehen worden, sofern nichts anderes angegeben ist.

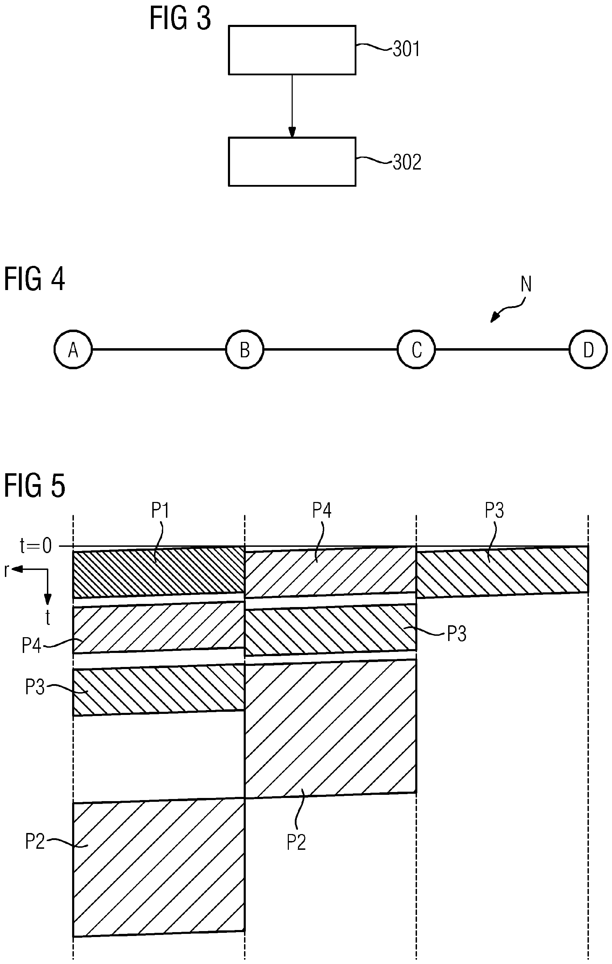

In Fig. 3 ist ein Ablaufdiagramm eines Ausführungsbeispiels eines Verfahrens zur Übertragung von Datenpaketen P1-P4 in einem Kommunikationsnetzwerk N aus synchronisierten Knoten A-D über einen vorbestimmten Pfad P in dem Kommunikationsnetzwerk N dargestellt. Dazu zeigen die Fig. 4 und 5 ein schematisches Diagramm der Netztopologie eines solchen Kommunikationsnetzwerkes N und die Fig. 5 ein schematisches Diagramm zur erfindungsgemäßen Übertragung der Datenpakete P1-P4 über das Kommunikationsnetzwerk 1. Die synchronisierten Knoten A, B, C, D des vorbestimmten Pfades P umfassen einen Quellknoten D, einen Zielknoten A und zwei dazwischen angeordnete Zwischenknoten B, C. Die Knoten A-D sind dazu eingerichtet, die Datenpakete P1-P4 in den vorbestimmten Pfad P synchronisiert einzuspeisen. Der jeweilige Knoten A-D hat einen ersten Zwischenspeicher zum Zwischenspeichern hochpriorer Datenpakete P1, P3, P4 und einen zweiten Zwischenspeicher zum Zwischenspeichern von niedrigprioren Datenpaketen P2 (nicht dargestellt).

In Schritt 301 speist der Quellknoten D ein hochpriores Datenpaket P3 in den vorbestimmten Pfad P in Richtung des Zielknotens A ein. In Schritt 302 speist ein jeder der Zwischenknoten B, C, deren erster Zwischenspeicher zu dem bestimmten Zeitpunkt leer ist, ein zweites hochpriores Datenpaket P4 in den vorbestimmten Pfad P in Richtung des Zielknotens A ein. In dem Beispiel der Fig. 5 trifft dies nur auf den Zwischenknoten C zu, da der Zwischenknoten B schon selbst ein erstes hochpriores Datenpaket P1 einspeist. Da die Knoten A, B, C, D synchronisiert sind und synchronisierte Datenpakete P1-P4 in den Pfad P einspeisen, werden die Schritte 301 und 302 gleichzeitig, d.h. zu dem bestimmten Zeitpunkt, durchgeführt.

Zu diesem bestimmten Zeitpunkt speist insbesondere jeder der Zwischenknoten C ein zweites hochpriores Datenpaket P3 in den vorbestimmten Pfad P ein, deren erster Zwischenspeicher zu dem bestimmten Zeitpunkt leer ist und deren zweiter Zwischenspeicher zu dem bestimmten Zeitpunkt mit zumindest einem niedrigprioren Datenpaket P2 gefüllt ist. Die Länge des zweiten hochprioren Datenpaketes P4 wird vorzugsweise in Abhängigkeit der Länge des ersten hochprioren Datenpaketes P3 und/oder in Abhängigkeit einer maximalen Länge der niedrigprioren Datenpakete P2 eingestellt.

Die Knoten A, B, C, D sind mittels eines Zeitmultiplexverfahrens synchronisiert, wobei als der bestimmte Zeitpunkt der Beginn eines bestimmten Zeitfensters das Zeitmultiplexverfahren verwendet wird. Beispielsweise werden durch das Zeitmultiplexverfahren erste Zeitfenster für einen isochronen Realzeitdienst, zweite Zeitfenster für einen nicht-isochronen Realzeitdienst und dritte Zeitfenster für einen nicht-realzeitfähigen Dienst bereitgestellt. Als der bestimmte Zeitpunkt kann der Beginn des zweiten Zeitfensters oder der Beginn des dritten Zeitfensters jeweils verwendet werden.

Die hochprioren und niedrigprioren Datenpakete P1, P2, P3, P4 werden in dem zweiten Zeitfenster und dem dritten Zeitfenster in Abhängigkeit von den Datenpaketen P1, P2, P3, P4 zugeordneten Prioritäten und von statistischem Multiplexen auf dem vorbestimmten Pfad P weitergeleitet. Das jeweilige zweite hochpriore Datenpaket P4, welches auch als zusätzliches hochpriores Datenpaket bezeichnet werden kann, wird beispielsweise durch Segmentierung eines in dem zweiten Zwischenspeicher gespeicherten niedrigprioren Datenpaketes P2 generiert. Alternativ kann das zweite hochpriore Datenpaket P4 auch als ein Dummy-Datenpaket ohne sinnvolle Daten in seinem Nutzdatenfeld ausgestaltet werden.

Für den Fall, dass die Laufzeit eines Datenpaketes P1-P4 zwischen zwei Knoten A-D des vorbestimmten Pfades P kleiner als ein vorgegebener minimaler zeitlicher Abstand zwischen zwei an einem Knoten A-D des vorbestimmten Pfades P einzuspeisenden Datenpaketen P1-P4 ist, wird ein Header eines an dem Zwischenknoten C ankommenden und noch nicht vollständig empfangenen Datenpaketes P3 ausgewertet. Ferner wird in Abhängigkeit des ausgewerteten Headers ein zweites hochpriores Datenpaket P4 durch den Zwischenknoten C generiert und in den vorbestimmten Pfad P eingespeist. Alternativ kann das ankommende Datenpaket P3 vollständig empfangen und anschließend durch den Zwischenknoten C wieder in den vorbestimmten Pfad P eingespeist werden.

Alternativ können für den obigen Fall, dass die Laufzeit des Datenpaketes zwischen zwei Knoten des vorbestimmten Pfades P kleiner als ein vorgegebener minimaler zeitlicher Abstand zwischen zwei an dem Knoten des vorbestimmten Pfades P einzuspeisenden Datenpaketen P1-P4 ist, ausschließlich hochpriore Datenpakete von dem Zwischenknoten C in den vorbestimmten Pfad P eingespeist werden.

Wie oben ausgeführt, zeigt die Fig. 4 das schematische Diagramm der Netztopologie des Kommunikationsnetzwerkes N zur Durchführung des Verfahrens der Fig. 3. Hierzu zeigt die Fig. 5 ein schematisches Diagramm zur erfindungsgemäßen Übertragung der Datenpakete P1-P4 über das Kommunikationsnetzwerk N. Dabei visualisiert die Fig. 5 den Nachrichtenfluss der Pakete P1-P4. Dabei wird an dem Knoten C ein zusätzliches hochpriores Paket P4, welches als Ziel den Zielknoten A hat, eingespeist. Durch die höhere Priorität des zusätzlichen hochprioren Datenpaketes P4 gegenüber dem niedrigprioren Datenpaket P2 wird das Datenpaket P4 zu Beginn des Zyklus gesendet. Nach der Übermittlung dieses hochprioren Datenpakets P4 wird nach Ablauf des Interframe Gap das nächste Datenpaket zur Übertragung ausgewählt. Zu diesem Zeitpunkt stehen sowohl das niedrigpriore Datenpaket P2 als auch das bereits vom Nachbarknoten D empfangene hochpriore Datenpaket P3 zur Auswahl. Dies ist möglich, da bei 100 Mbit/s-Ethernet die Laufverzögerung der Signale auf dem Link kleiner als die Dauer des Interframe Gap ist. Deshalb wird nun das hochpriore Datenpaket P3 sofort durch den Knoten C weitergeleitet und kommt mit minimierter Ende-zu-Ende-Verzögerung und Jitter an dem Zielknoten A an.

Der beschriebene Ansatz ist nicht auf PROFINET beschränkt, sondern auf alle anderen Ethernet- Lösungen anwendbar, die Zeitzyklen über eine Synchronisierung der Knoten oder Stationen definieren und Priorisierung von Paketen anwenden. Ein weiteres Beispiel hierfür ist Ethernet POWERLINK.
Ferner kann der beschriebene Ansatz auch auf Datenpakte einer Mehrzahl von Prioritätsklassen angewendet werden, wobei die niedrigprioren Datenpakete einer unteren oder der untersten Prioritätsklasse zugeordnet sind und die hochprioren Datenpakete einer hohen oder der höchsten Prioritätsklasse zugeordnet sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Übertragen von Datenpaketen (P1-P4) in einem Kommunikationsnetzwerk (N) aus Knoten (A, B, C, D) über einen vorbestimmten Pfad (P) in dem Kommunikationsnetzwerk (N), wobei die Knoten (A, B, C, D) des vorbestimmten Pfades (P) einen Quellknoten (D), einen Zielknoten (A) und zumindest einen Zwischenknoten (B, C) umfassen, Datenpakete (P1-P4) in den vorbestimmten Pfad (P) einspeisen und jeweils einen ersten Zwischenspeicher zum Zwischenspeichern hochpriorer Datenpakete (P1, P3, P4) und einen zweiten Zwischenspeicher zum Zwischenspeichern von niedrigprioren Datenpaketen (P2) aufweisen, **dadurch gekennzeichnet, dass** die Knoten (A, B, C, D) synchronisierte Knoten sind, die Datenpakete (P1 - P4) synchronisierte Datenpakete sind und ein jeder der Zwischenknoten (B, C), deren erster Zwischenspeicher zu einem bestimmten Zeitpunkt leer ist und deren zweiter Zwischenspeicher zu dem bestimmten Zeitpunkt mit zumindest einem niedrigprioren Datenpaket (P2) gefüllt ist, zu welchem bestimmten Zeitpunkt der Quellknoten (A) ein erstes hochpriores Datenpaket (P3) in den vorbestimmten Pfad (P) in Richtung des Zielknotens (A) einspeist, ein zweites hochpriores Datenpaket (P4) generiert und in den vorbestimmten Pfad (P) in Richtung des Zielknoten (A) einspeist.

2. Verfahren nach Anspruch 1,
**dadurch gekennzeichnet,**
**dass** die Länge des zweiten hochprioren Datenpaketes (P4) in Abhängigkeit der Länge des ersten hochprioren Datenpaketes (P3) eingestellt wird.

3. Verfahren nach Anspruch 1 oder 2,
**dadurch gekennzeichnet,**
**dass** die Länge des zweiten hochprioren Datenpaketes (P4) in Abhängigkeit einer maximalen Länge der niedrigprioren Datenpakete (P2) eingestellt wird.

4. Verfahren nach einem der Ansprüche 1 bis 3,
**dadurch gekennzeichnet,**
**dass** die Knoten (A, B, C, D) des Kommunikationsnetzwerkes (N) mittels eines Zeitmultiplexverfahrens synchronisiert werden, wobei als der bestimmte Zeitpunkt der Beginn eines bestimmten Zeitfensters des Zeitmultiplexverfahrens verwendet wird.

5. Verfahren nach Anspruch 4,
**dadurch gekennzeichnet,**
**dass** durch das Zeitmultiplexverfahren erste Zeitfenster für einen isochronen Realzeitdienst, zweite Zeitfenster für einen nicht-isochronen Realzeitdienst und dritte Zeitfenster für einen nicht-realzeitfähigen Dienst bereitgestellt werden, wobei als der bestimmte Zeitpunkt der Beginn des zweiten Zeitfensters oder der Beginn des dritten Zeitfensters verwendet wird.

6. Verfahren nach Anspruch 5,
**dadurch gekennzeichnet,**
**dass** die hochprioren und die niedrigprioren Datenpakete (P1, P2, P3, P4) in dem zweiten Zeitfenster und in dem dritten Zeitfenster in Abhängigkeit von den Datenpaketen (P1, P2, P3, P4) zugeordneten Prioritäten weitergeleitet werden.

7. Verfahren nach einem der Ansprüche 1 bis 6,
**dadurch gekennzeichnet,**
**dass** das Kommunikationsnetzwerk (N) ein Ethernet-Netzwerk, insbesondere ein PROFINET-Netzwerk, ist.

8. Verfahren nach Anspruch 1,
**dadurch gekennzeichnet,**
**dass** die hochprioren Datenpakete (P1, P3, P4) eine erste maximale Datenpaketlänge und die niedrigprioren Datenpakete (P2) eine zweite maximale Datenpaketlänge aufweisen, welche größer als die erste maximale Datenpaketlänge ist.

9. Verfahren nach einem der Ansprüche 1 bis 8,
**dadurch gekennzeichnet,**
**dass** das zweite hochpriore Datenpaket (P4) durch Segmentierung eines in dem zweiten Zwischenspeicher gespeicherten niedrigprioren Datenpaketes (P3) generiert wird.

10. Verfahren nach einem der Ansprüche 1 bis 8,
**dadurch gekennzeichnet,**
**dass** das zweite hochpriore Datenpaket (P4) als ein Dummy-Datenpaket, insbesondere ohne Nutzdaten, generiert wird.

11. Verfahren nach einem der Ansprüche 1 bis 10,
**dadurch gekennzeichnet,**
**dass** für den Fall, dass die Laufzeit eines Datenpaketes zwischen zwei Knoten (A, B, C, D) des vorbestimmten Pfades (P) kleiner als ein vorgegebener minimaler zeitlicher Abstand zwischen zwei an einem Knoten (A, B, C, D) des vorbestimmten Pfades (P) einzuspeisenden Datenpaketen (P1, P2, P3, P4) ist, ein Header eines an dem Zwischenknoten (B, C) ankommenden und noch nicht vollständig empfangenen Datenpaketes (P3) ausgewertet wird, wobei in Abhängigkeit des ausgewerteten Headers das zweite hochpriore Datenpaket (P4) durch den Zwischenknoten (B, C) generiert und in den vorbestimmten Pfad (P) eingespeist wird, oder das ankommende Datenpaket (P3) vollständig empfangen und anschließend durch den Zwischenknoten (B, C) wieder in den vorbestimmten Datenpfad (P) eingespeist wird.

12. Verfahren nach einem der Ansprüche 1 bis 10,
**dadurch gekennzeichnet,**
**dass** für den Fall, dass die Laufzeit eines Datenpaketes zwischen zwei Knoten (A, B, C, D) des vorbestimmten Pfades (P) kleiner als ein vorgegebener minimaler zeitlicher Abstand zwischen zwei an einem Knoten (A, B, C, D) des vorbestimmten Pfades (P) einzuspeisenden Datenpaketen (P1, P2, P3, P4) ist, ausschließlich hochpriore Datenpakete (P1, P3, P4) von den Zwischenknoten (B, C) in den vorbestimmten Pfad (P) eingespeist werden.

13. Computerprogrammprodukt, welches auf einer programmgesteuerten Einrichtung die Durchführung aller Schritte eines Verfahrens nach einem der Ansprüche 1 bis 12 veranlasst.

14. Kommunikationsnetzwerk (N) aus Knoten zum Übertragen von Datenpaketen (A, B, C, D) über einen vorbestimmten Pfad (P) in dem Kommunikationsnetzwerk (N), wobei die Knoten (A, B, C, D) des vorbestimmten Pfades (P) einen Quellknoten (D), einen Zielknoten (A) und zumindest einen Zwischenknoten (B, C) umfassen, dazu eingerichtet sind, Datenpakete (P1-P4) in den vorbestimmten Pfad (P) einzuspeisen, und jeweils einen ersten Zwischenspeicher zum Zwischenspeichern hochpriorer Datenpakete (P1, P3, P4) und einen zweiten Zwischenspeicher zum Zwischenspeichern von niedrigprioren Datenpaketen (P2) aufweisen, **dadurch gekennzeichnet, dass** die Knoten (A, B, C, D) synchronisierte Knoten sind, die Datenpakete (P1 - P4) synchronisierte Datenpakete sind und ein jeder der Zwischenknoten (B, C), deren erster Zwischenspeicher zu einem bestimmten Zeitpunkt leer ist und deren zweiter Zwischenspeicher zu dem bestimmten Zeitpunkt mit zumindest einem niedrigprioren Datenpaket (P2) gefüllt ist, zu welchem bestimmten Zeitpunkt der Quellknoten (D) ein erstes hochpriores Datenpaket (P3) in den vorbestimmten Pfad (P) in Richtung des Zielknotens (A) einspeist, dazu eingerichtet ist, ein zweites hochpriores Datenpaket (P4) zu generieren und in den vorbestimmten Pfad (P) in Richtung des Zielknotens (A) einzuspeisen.

## Claims

1. Method for transmitting data packets (P1-P4) in a communication network (N) comprising nodes (A, B, C, D) via a predetermined path (P) in the communication network (N), wherein the nodes (A, B, C, D) of the predetermined path (P) comprise a source node (D), a destination node (A) and at least one intermediate node (B, C), feed data packets (P1-P4) into the predetermined path (P) and each have a first buffer store for buffer-storing high-priority data packets (PI, P3, P4) and a second buffer store for buffer-storing low-priority data packets (P2), **characterized in that** the nodes (A, B, C, D) are synchronized nodes, the data packets (P1-P4) are synchronized data packets and each of the intermediate nodes (B, C) whose first buffer store is empty at a particular instant and whose second buffer store is filled with at least one low-priority data packet (P2) at the particular instant, at which particular instant the source node (A) feeds a first high-priority data packet (P3) into the predetermined path (P) in the direction of the destination node (A), generates a second high-priority data packet (P4) and feeds it into the predetermined path (P) in the direction of the destination node (A).

2. Method according to Claim 1,
**characterized**
**in that** the length of the second high-priority data packet (P4) is set on the basis of the length of the first high-priority data packet (P3).

3. Method according to Claim 1 or 2,
**characterized**
**in that** the length of the second high-priority data packet (P4) is set on the basis of a maximum length of the low-priority data packets (P2).

4. Method according to one of Claims 1 to 3,
**characterized**
**in that** the nodes (A, B, C, D) of the communication network (N) are synchronized by means of a time-division multiplexing method, wherein the particular instant used is the beginning of a particular time window of the time-division multiplexing method.

5. Method according to Claim 4,
**characterized**
**in that** the time-division multiplexing method provides first time windows for an isochronous realtime service, second time windows for a nonisochronous realtime service and third time windows for a nonrealtime service, wherein the particular instant used is the beginning of the second time window or the beginning of the third time window.

6. Method according to Claim 5,
**characterized**
**in that** the high-priority and low-priority data packets (PI, P2, P3, P4) are forwarded in the second time window and in the third time window on the basis of priorities associated with the data packets (PI, P2, P3, P4).

7. Method according to one of Claims 1 to 6,
**characterized**
**in that** the communication network (N) is an Ethernet network, particularly a PROFINET network.

8. Method according to Claim 1,
**characterized**
**in that** the high-priority data packets (PI, P3, P4) have a first maximum data packet length and the low-priority data packets (P2) have a second maximum data packet length, which is greater than the first maximum data packet length.

9. Method according to one of Claims 1 to 8,
**characterized**
**in that** the second high-priority data packet (P4) is generated by segmentation of a low-priority data packet (P3) stored in the second buffer store.

10. Method according to one of Claims 1 to 8,
**characterized**
**in that** the second high-priority data packet (P4) is generated as a dummy data packet, particularly without useful data.

11. Method according to one of Claims 1 to 10,
**characterized**
**in that** if the propagation time for a data packet between two nodes (A, B, C, D) of the predetermined path (P) is shorter than a prescribed minimum interval of time between two data packets (PI, P2, P3, P4) that are to be fed in at a node (A, B, C, D) of the predetermined path (P), then a header of a data packet (P3) arriving and not yet completely received at the intermediate node (B, C) is evaluated, wherein the evaluated header is taken as a basis for the second high-priority data packet (P4) to be generated by the intermediate node (B, C) and fed into the predetermined path (P), or for the arriving data packet (P3) to be received completely and then fed by the intermediate node (B, C) into the predetermined data path (P) again.

12. Method according to one of Claims 1 to 10,
**characterized**
**in that** if the propagation time for a data packet between two nodes (A, B, C, D) of the predetermined path (P) is shorter than a prescribed minimum interval of time between two data packets (PI, P2, P3, P4) that are to be fed in at a node (A, B, C, D) of the predetermined path (P), then exclusively high-priority data packets (PI, P3, P4) are fed from the intermediate nodes (B, C) into the predetermined path (P).

13. Computer program product that prompts the performance of all the steps of a method according to one of Claims 1 to 12 on a program-controlled device.

14. Communication network (N) comprising nodes for transmitting data packets (A, B, C, D) via a predetermined path (P) in the communication network (N), wherein the nodes (A, B, C, D) of the predetermined path (P) comprise a source node (D), a destination node (A) and at least one intermediate node (B, C), are set up to feed data packets (P1-P4) into the predetermined path (P) and each have a first buffer store for buffer-storing high-priority data packets (PI, P3, P4) and a second buffer store for buffer-storing low-priority data packets (P2), **characterized in that** the nodes (A, B, C, D) are synchronized nodes, the data packets (P1-P4) are synchronized data packets and each of the intermediate nodes (B, C) whose first buffer store is empty at a particular instant and whose second buffer store is filled with at least one low-priority data packet (P2) at the particular instant, at which particular instant the source node (D) feeds a first high-priority data packet (P3) into the predetermined path (P) in the direction of the destination node (A), is set up to generate a second high-priority data packet (P4) and to feed it into the predetermined path (P) in the direction of the destination node (A).

## Revendications

1. Procédé de transmission de paquets de données (Pl - P4) dans un réseau de communication (N) composé de noeuds (A, B, C, D) sur un chemin prédéterminé (P) dans le réseau de communication (N), les noeuds (A, B, C, D) du chemin prédéterminé (P) comprenant un noeud source (D), un noeud cible (A) et au moins un noeud intermédiaire (B, C), injectant des paquets de données (Pl - P4) dans le chemin prédéterminé (P) et présentant respectivement une première mémoire intermédiaire pour stocker des paquets de données de haute priorité (Pl, P3, P4) et une deuxième mémoire intermédiaire pour stocker des paquets de données de faible priorité (P2), **caractérisé en ce que** les noeuds (A, B, C, D) sont des noeuds synchronisés, les paquets de données (Pl - P4) sont des paquets de données synchronisés et chacun des noeuds intermédiaires (B, C) dont la première mémoire intermédiaire est vide à un instant déterminé et dont la deuxième mémoire intermédiaire est, à l'instant déterminé, remplie avec au moins un paquet de données de faible priorité (P2), instant déterminé auquel le noeud source (A) injecte un premier paquet de données de haute priorité (P3) dans le chemin prédéterminé (P) en direction du noeud cible (A), génère un deuxième paquet de données de haute priorité (P4) et l'injecte dans le chemin prédéterminé (P) en direction du noeud cible (A).

2. Procédé selon la revendication 1, **caractérisé en ce que** la longueur du deuxième paquet de données de haute priorité (P4) est ajustée en fonction de la longueur du premier paquet de données de haute priorité (P3).

3. Procédé selon la revendication 1 ou 2, **caractérisé en ce que** la longueur du deuxième paquet de données de haute priorité (P4) est ajustée en fonction d'une longueur maximale des paquets de données de faible priorité (P2).

4. Procédé selon l'une des revendications 1 à 3, **caractérisé en ce que** les noeuds (A, B, C, D) du réseau de communication (N) sont synchronisés au moyen d'un procédé de multiplexage temporel, en tant qu'instant déterminé étant utilisé le début d'une fenêtre temporelle déterminée du procédé de multiplexage temporel.

5. Procédé selon la revendication 4, **caractérisé en ce que** sont mises à disposition, par le procédé de multiplexage temporel, des premières fenêtres temporelles pour un service en temps réel isochrone, des deuxièmes fenêtres temporelles pour un service en temps réel non isochrone et des troisièmes fenêtres temporelles pour un service non apte au temps réel, en tant qu'instant déterminé étant utilisé le début de la deuxième fenêtre temporelle ou le début de la troisième fenêtre temporelle.

6. Procédé selon la revendication 5, **caractérisé en ce que** les paquets de données de haute priorité et les paquets de données de faible priorité (Pl, P2, P3, P4) sont retransmis dans la deuxième fenêtre temporelle et dans la troisième fenêtre temporelle en fonction de priorités affectées aux paquets de données (Pl, P2, P3, P4).

7. Procédé selon l'une des revendications 1 à 6, **caractérisé en ce que** le réseau de communication (N) est un réseau Ethernet, et plus particulièrement un réseau PROFINET.

8. Procédé selon la revendication 1, **caractérisé en ce que** les paquets de données de haute priorité (Pl, P3, P4) présentant une première longueur maximale des paquets de données et les paquets de données de faible priorité (P2) présentant une deuxième longueur maximale des paquets de données qui est supérieure à la première longueur maximale des paquets de données.

9. Procédé selon l'une des revendications 1 à 8, **caractérisé en ce que** le deuxième paquet de données de haute priorité (P4) est généré par segmentation d'un paquet de données de faible priorités (P3) stocké dans la deuxième mémoire intermédiaire.

10. Procédé selon l'une des revendications 1 à 8, **caractérisé en ce que** le deuxième paquet de données de haute priorité (P4) est généré en tant que paquet de données factice, et plus particulièrement sans données utiles.

11. Procédé selon l'une des revendications 1 à 10, **caractérisé en ce que**, pour le cas où le temps de propagation d'un paquet de données entre deux noeuds (A, B, C, D) du chemin prédéterminé (P) est inférieur à une distance temporelle minimale prédéfinie entre deux paquets de données (Pl, P2, P3, P4) à injecter au niveau d'un noeud (A, B, C, D) du chemin prédéterminé (P), un en-tête d'un paquet de données (P3) arrivant au noeud intermédiaire (B, C) et non encore entièrement reçu est évalué, le deuxième paquet de données de haute priorité (P4) étant généré par le noeud intermédiaire (B, C) en fonction de l'en-tête évalué et injecté dans le chemin prédéterminé (P), ou le paquet de données arrivant (P3) étant entièrement reçu, puis de nouveau injecté dans le chemin de données prédéterminé (P) par le noeud intermédiaire (B, C).

12. Procédé selon l'une des revendications 1 à 10, **caractérisé en ce que**, pour le cas où le temps de propagation d'un paquet de données entre deux noeuds (A, B, C, D) du chemin prédéterminé (P) est inférieur à une distance temporelle minimale prédéfinie entre deux paquets de données (Pl, P2, P3, P4) à injecter au niveau d'un noeud (A, B, C, D) du chemin prédéterminé (P), uniquement des paquets de données de haute priorité (Pl, P3, P4) sont injectés par les noeuds intermédiaires (B, C) dans le chemin prédéterminé (P).

13. Produit de programme informatique qui, sur un dispositif commandé par programme, provoque l'exécution de toutes les étapes d'un procédé selon l'une des revendications 1 à 12.

14. Réseau de communication (N) composé de noeuds pour la transmission de paquets de données (A, B, C, D) sur un chemin prédéterminé (P) dans le réseau de communication (N), les noeuds (A, B, C, D) du chemin prédéterminé (P) comprenant un noeud source (D), un noeud cible (A) et au moins un noeud intermédiaire (B, C), configurés pour injecter des paquets de données (Pl - P4) dans le chemin prédéterminé (P), et présentant respectivement une première mémoire intermédiaire pour stocker des paquets de données de haute priorité (Pl, P3, P4) et une deuxième mémoire intermédiaire pour stocker des paquets de données de faible priorité (P2), **caractérisé en ce que** les noeuds (A, B, C, D) sont des noeuds synchronisés, les paquets de données (Pl - P4) sont des paquets de données synchronisés et chacun des noeuds intermédiaires (B, C) dont la première mémoire intermédiaire est vide à un instant déterminé et dont la deuxième mémoire intermédiaire est, à l'instant déterminé, remplie avec au moins un paquet de données de faible priorité (P2), instant déterminé auquel le noeud source (D) injecte un premier paquet de données de haute priorité (P3) dans le chemin prédéterminé (P) en direction du noeud cible (A), est configuré pour générer un deuxième paquet de données de haute priorité (P4) et l'injecter dans le chemin prédéterminé (P) en direction du noeud cible (A).
